# EUROPÄISCHE PATENTSCHRIFT

(11) **EP 0 429 691 B1**
(45) Veröffentlichungstag und Bekanntmachung des Hinweises auf die Patenterteilung: **20.07.1994**
(21) Anmeldenummer: 89121852.1
(22) Anmeldetag: 27.11.1989
(51) Int. Cl.: G01S 17/42, G01S 7/48

(54) **Vorrichtung zum Bestimmen der Ablage eines Ziels von einem bestimmten Ort**
Device for determining the position of a target from a predetermined position
Dispositif pour déterminer la position d'une cible à partir d'un endroit prédéterminé

(43) Veröffentlichungstag der Anmeldung: 05.06.1991
(73) Patentinhaber: Precitronic Gesellschaft für Feinmechanik und Electronic m.b.H, 22761 Hamburg (DE)
(72) Erfinder:
(74) Vertreter: Glawe, Delfs, Moll & Partner

(56) Entgegenhaltungen:
- EP-A- 0 218 178
- EP-A- 0 246 354
- EP-A- 0 253 017
- DE-A- 1 811 540
- DE-A- 2 850 743
- FR-A- 2 293 714
- FR-A- 2 559 541
- GB-A- 1 180 778

## Beschreibung

Die Erfindung betrifft eine Vorrichtung zum Bestimmen der Ablage eines mit einem Retroreflektor versehenen Ziels von einem vorbestimmten Ort in drei Raumrichtungen. Eine solche Vorrichtung ist aus der FR-A-2 559 541, die der DE-A-3 404 496 entspricht, bekannt.

Die Vorrichtung kann zum Beispiel aber nicht ausschließlich für Zwecke der Schußsimulation verwendet werden. Allgemein kann die Vorrichtung für Zwecke verwendet werden, bei denen eine Richtung und eine Entfernung eines Ziels mit anderen Mitteln eingestellt wird und dann überprüft werden soll, wie genau das Ziel eingestellt worden ist. Die Vorrichtung könnte so z.B. Vermessungszwecken dienen.

Die Aufgabe besteht in der Schaffung einer Vorrichtung, mit der die Ablage des eingestellten Zielortes vom tatsächlichen Zielort einfach und zuverlässig gemessen werden kann.

Die erfindungsgemäße Lösung besteht darin, daß die Vorrichtung aufweist:
einen Laser und einen daneben angeordneten Quadrantendetektor, die an einem gemeinsamen Element für gemeinsame Verschiebung in den drei Raumrichtungen befestigt sind;
optische Abbildungseinrichtungen zum Richten des Laserstrahls auf den Retroreflektor und zum Abbilden des reflektierten Lichts auf den Quadrantendetektor,
eine Laserentfernungsmeßeinrichtung, und
Schaltungen zum Nachführen des gemeinsamen Elements in Laserstrahlrichtung auf eine Stellung, die optimaler Focussierung auf das Ziel bei der gemessenen Entfernung entspricht, und in den dazu senkrechten Richtungen auf eine Stellung, bei der der Quadrantendetektor ein Nullsignal abgibt, wobei aus der Größe der Nachführung die Ablage berechenbar und anzeigbar ist.

Wenn das Ziel eingestellt wird, z.B. bei Schußsimulation, so wird die Vorrichtung entsprechend ausgerichtet, d.h. das gemeinsame Element wird in Laserstrahlrichtung entsprechend der eingestellten Entfernung eingestellt, so daß der Laserstrahl durch die optische Abbildungseinrichtung (meist eine Linse oder ein Linsensystem) optimal auf das Ziel fokussiert wird. In den dazu senkrechten Richtungen wird das gemeinsame Element ebenfalls entsprechend ausgerichtet.

Soll nun die Ablage bestimmt werden, so wird der Laser eingeschaltet, in den z.B. ein Trigger, insbesondere der Trigger eines Schußsimulators, gedrückt wird. In diesem Falle wird das Lasersignal zum Ziel gesandt, wo es vom Retroreflektor zurückreflektiert wird und einerseits über einen Strahlteiler zur Laserentfernungsmeßeinrichtung gelangt. Stimmt die eingestellte Entfernung nicht mit der auf diese Weise durch eine Laufzeitmessung bestimmten Entfernung überein, erfolgt eine Nachstellung des gemeinsamen Elements und damit des Lasers und des Quadrantendetektors in Z-Richtung, d.h. in Laserstrahlrichtung, so daß der Lichtfleck am Ort des Ziels optimale Größe hat. Andererseits fällt das reflektierte Laserlicht auf den Quadrantendetektor. Fällt es hier nicht genau auf den Schnittpunkt der vier Quadranten, so gibt der Quadrantendetektor Signale ab, die dazu benutzt werden, das gemeinsame Element so zu verschieben, daß der Lichtfleck genau auf das Zentrum des Quadrantendetektors fällt, der dann sein Nullsignal abgibt. Die Verschiebung in Z-Richtung für Einstellung der Entfernung und die notwendigen Verschiebungen in den dazu senkrechten Richtungen (X-Richtung und Y-Richtung), um das Nullsignal des Quadrantendetektors zu erhalten, sind ein Maß für die Ablage, die nach entsprechender Umrechnung von einer entsprechenden Anzeige angezeigt werden kann.

Wenn oben von einem Laufzeitentfernungsmesser die Rede war, so ist dieser besonders zweckmäßig; es könnten aber auch andere Methoden der Entfernungsmessung verwendet werden.

Auch der Strahlteiler vor dem Quadrantendetektor ist zwar besonders vorteilhaft; bei anderen Arten der Entfernungsmessung könnte aber auf denselben verzichtet werden.

Zweckmäßigerweise sind die optischen Kanäle für ausgesandten Laserstrahl und reflektiertes empfangenes Licht voneinander abgeschirmt, damit nicht Streulicht direkt vom Laser zum Quadrantendetektor gelangen kann, was die Empfindlichkeit herabsetzen würde.

Die beiden Kanäle sind zweckmäßigerweise nebeneinander angeordnet. Sie können aber auch konzentrisch angeordnet sein, indem um die Linse, die das Laserlicht aussendet, konzentrisch eine ringförmige Linse angeordnet ist, die das reflektierte Licht hinter dem Laser auf den Quadrantendetektor konzentriert.

Zweckmäßigerweise weist die Vorrichtung einen Halogenscheinwerfer auf, der bei einer besonders vorteilhaften Ausführungsform einen IR-Filter mit Schwenkeinrichtung aufweist. Der Halogenscheinwerfer und/oder der IR-Filter kann dann ebenfalls durch den Trigger oder einen Vortrigger eingeschaltet werden. Zweckmäßigerweise weist die Vorrichtung auch noch eine Fernsehkamera auf, für die z.B. der Halogenscheinwerfer als Beleuchtungseinrichtung verwendet werden kann, wenn andere Lichtquellen nicht zur Verfügung stehen.

Zweckmäßigerweise ist die Fernsehkamera eine Matrix-CCD-Kamera, da dann die empfangenen Signale besonders gut ausgewertet werden können.

Sowohl das Fernsehbild der Fernsehkamera als auch die Anzeigeeinrichtung für Trefferlage und Entfernung kann bei Schußsimulation nicht nur dem Auszubildenden, sondern insbesondere auch einem Ausbilder sichtbar gemacht werden, der auf diese Weise die Möglichkeit hat, die Ausbildung besonders wirkungsvoll zu gestalten und zu überprüfen.

Die Erfindung wird im folgenden anhand von vorteilhaften Ausführungsformen unter Bezugnahme auf die beigefügten Zeichnungen beschrieben. Es zeigen:
- Fig. 1: in perspektivischer Ansicht und teilweise im Schnitt eine Ausführungsform der Vorrichtung der Erfindung;
- Fig. 2: in Draufsicht den Quadrantendetektor, der bei der Erfindung Verwendung finden kann; und
- Fig. 3: eine andere Art der optischen Elemente der Vorrichtung.

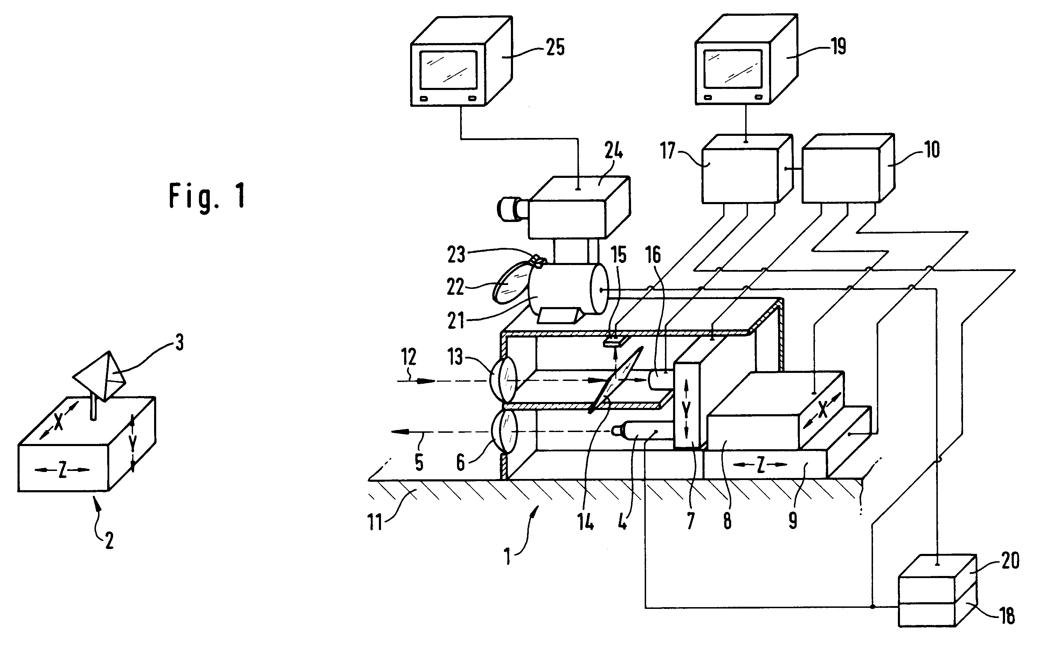

In den Figuren ist allgemein mit 1 eine Vorrichtung gezeigt, mit der die Ablage eines Zieles 2 bestimmt werden kann. Das Ziel ist mit einem Retroreflektor 3 versehen und kann in den X, Y und Z-Richtungen verschoben werden, wie dies durch die entsprechenden Pfeile in Fig. 1 angedeutet ist.

Die Vorrichtung 1 weist einen Laser 4 auf, dessen ausgesandtes Licht 5 durch eine Linse 6 gebündelt wird. Der Laser 4 ist an einem Element 7 befestigt, das Teil eines Verschiebungsmechanismus ist, der aus den Elementen 7, 8 und 9 besteht.

Das Element 9 kann mit nicht gezeigten Antriebseinrichtungen über eine Steuerung und Energiequelle 10 auf einer Unterlage 11 in Z-Richtung, d.h. in Laserstrahlrichtung, bewegt werden. Auf dem Element 9 ist ein Element 8 angeordnet, das ebenfalls mit Hilfe der Steuerung und Energiequelle 10 bewegt werden kann, und zwar relativ zum Element 9 und in X-Richtung, d.h. der horizontalen Richtung. Das Element 7 wiederum kann entsprechend in vertikaler Y-Richtung relativ zum Element 8 bewegt werden.

Das vom Retroreflektor 3 reflektierte Licht 12 wird durch eine Linse 13 fokussiert und einerseits über einen Strahlteiler in Form einer halbdurchlässigen Platte 14 auf einen Detektor 15 geworfen, der der Laufzeitentfernungsmessung dient. Andererseits fällt das Licht auf einen Quadrantendetektor 16, der ebenfalls auf dem Element 7 neben dem Laser 4 befestigt ist. Detektor 15 und Quadrantendetektor 16 sind mit einer Auswertungsschaltung 17 verbunden, die wiederum mit der Steuerung und Energiequelle 10 für die Verschiebung verbunden ist.

Die Vorrichtung arbeitet wie folgt.

Nachdem z.B. bei Schußsimulation die Vorrichtung auf das Ziel gerichtet wurde, wird ein Trigger 18 betätigt, durch den der Laser 4 eingeschaltet wird. Das vom Ziel 2 bzw. Retroreflektor 3 reflektierte Licht 12 fällt auf den Detektor 15. Die Entfernung des Ziels wird dann durch eine Laufzeitmessung mit Hilfe der Einheit 17 bestimmt. Entspricht die Stellung des Lasers 4 in Z-Richtung nicht dem optimalen Ausleuchtungswinkel am Zielort, so erfolgt eine Nachstellung in Z-Richtung.

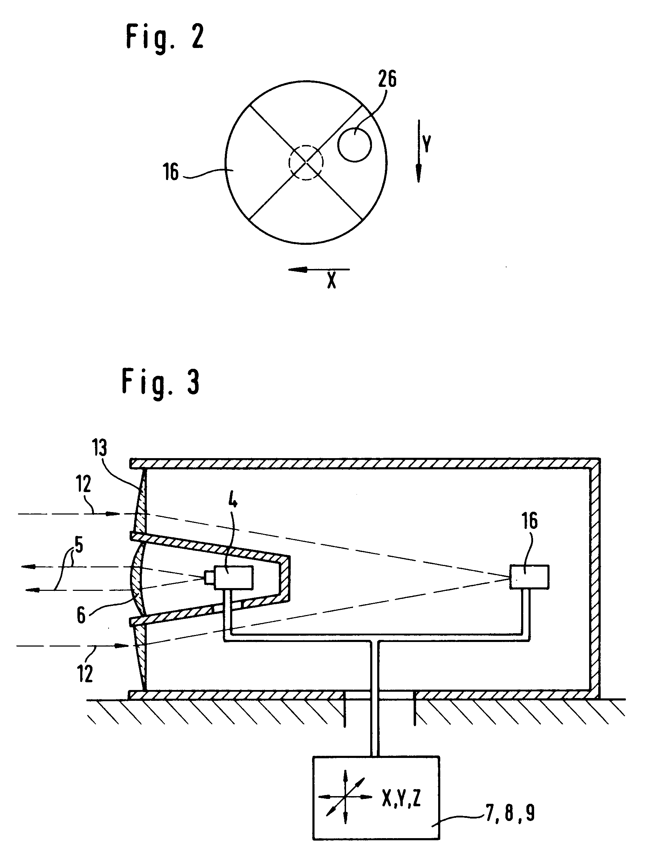

Der reflektierte Lichtfleck fällt andererseits auf den Quadrantendetektor 16, wie dies bei 18 in Fig. 2 angedeutet ist. Da sich der Lichtfleck 18 nicht im Zentrum befindet, erfolgt eine Nachstellung in Y- und X-Richtung, bis der Lichtfleck sich im Zentrum des Quadrantendetektors befindet, wie dies mit gestrichelter Linie angedeutet ist. Die Verschiebungen in Y- und X-Richtung erfolgen dabei ebenfalls über die Elektronik 17 und die Steuer- und Energieeinheit 10.

Sind so die richtigen Stellungen in den drei Richtungen eingestellt, so kann aus der durchgeführten Nachstellung in der Einheit 17 die Ablage bestimmt und in einer Einheit 19 angezeigt werden.

Wie dies in Fig. 1 gezeigt ist, kann am Trigger 18 auch noch ein Vortrigger 20 vorgesehen sein, durch den eine Halogenlampe 21 eingeschaltet, oder aber, falls die Halogenlampe vorher schon eingeschaltet war, ein IR-Filter 22 mit Hilfe eines Verschwenkmechanismus 23 von der Lampe 21 weggeschwenkt werden kann, so daß das Licht zum Ziel gelangt. Mit einer Fernsehkamera 24, insbesondere einer Matrix-CCD-Kamera, kann dann die Zielumgebung abgebildet und auf einem Monitor 25 gezeigt werden.

In Fig. 3 sind die Kanäle für ausgesandtes Laserlicht und empfangenes reflektiertes Licht nicht nebeneinander angeordnet wie bei der Ausführungsform der Fig. 1, sondern konzentrisch zueinander. Zu diesem Zweck ist die Linse 13 als ringförmige Linse konzentrisch um die Linse 6 angeordnet. Dabei hat die Linse 13 eine längere Brennweite, so daß das Licht hinter dem Laser 4 auf den Detektor 16 fokussiert wird. Laser 4 und Detektor 16 werden wieder gemeinsam durch eine Verstelleinrichtung 7, 8, 9 in den drei Raumrichtungen nachgestellt.

## Patentansprüche

1. Vorrichtung zum Bestimmen der Ablage eines mit einem Retroreflektor versehenen Ziels von einem vorbestimmten Ort in drei Raumrichtungen, die aufweist:
einen Laser (4) und einen daneben angeordneten positionsempfindlichen Detektor (16), die in einem gemeinsamen Element (7) angeordnet sind,
optische Abbildungseinrichtungen (6, 13) zum Richten des Laserstrahls (5) auf den Retroreflektor (3) und zum Abbilden des reflektierten Lichts (12) auf den positionsempflindlichen Detektor (16), und
eine Laserentfernungsmeßeinrichtung (15, 17), dadurch gekennzeichnet, daß
das gemeinsame Element (7) für gemeinsame Verschiebung des Lasers (4) und des Detektors (16) in den drei Raumrichtungen (X, Y, Z) angeordnet ist, und daß Schaltungen (10, 17) vorgesehen sind zum Nachführen des gemeinsamen Elements (7) in Laserstrahlrichtung (Z) auf eine Stellung, die optimaler Focussierung auf das Ziel bei der gemessenen Entfernung entspricht, und in den dazu senkrechten Richtungen (X, Y) auf eine Stellung, bei der der positionsempfindliche Detektor (16) ein Nullsignal abgibt, wobei aus der Größe der Nachführung die Ablage berechenbar und anzeigbar ist.

2. Vorrichtung nach Anspruch 1, dadurch gekennzeichnet, daß der positionsempfindliche Detektor ein Quadrantendetektor ist.

3. Vorrichtung nach Anspruch 1 oder 2, dadurch gekennzeichnet, daß die Laserentfernungsmeßeinrichtung (15, 17) ein Laufzeitentfernungsmesser ist.

4. Vorrichtung nach Anspruch 2 oder 3, dadurch gekennzeichnet, daß sie vor dem Quadrantendetektor (16) einen Strahlteiler (14) aufweist.

5. Vorrichtung nach einem der Ansprüche 1 bis 4, dadurch gekennzeichnet, daß die optischen Kanäle für ausgesandten Laserstrahl (5) und reflektiertes empfangenes Licht (12) voneinander abgeschirmt sind.

6. Vorrichtung nach einem der Ansprüche 1 bis 5, dadurch gekennzeichnet, daß die optischen Kanäle für ausgesandten Laserstrahl (5) und reflektiertes empfangenes Licht (12) nebeneinander angeordnet sind.

7. Vorrichtung nach einem der Ansprüche 1 bis 5, dadurch gekennzeichnet, daß die optischen Kanäle für ausgesandten Laserstrahl (5) und reflektiertes empfangenes Licht (12) konzentrisch angeordnet sind.

8. Vorrichtung nach einem der Ansprüche 1 bis 7, dadurch gekennzeichnet, daß sie zusätzlich einen Halogenscheinwerfer (21) aufweist.

9. Vorrichtung nach Anspruch 8, dadurch gekennzeichnet, daß der Halogenscheinwerfer (21) einen IR-Filter (22) mit Schwenkeinrichtung (23) aufweist.

10. Vorrichtung nach einem der Ansprüche 1 bis 9, dadurch gekennzeichnet, daß sie eine Fernsehkamera (24) aufweist.

11. Vorrichtung nach Anspruch 10, dadurch gekennzeichnet, daß die Fernsehkamera (24) eine Matrix-CCD-Kamera ist.

12. Vorrichtung nach einem der Ansprüche 1 bis 11 für Schußsimulation, dadurch gekennzeichnet, daß sie eine Anzeigeeinrichtung (19) für Trefferlage und Entfernung aufweist.

## Claims

1. Device for determining the deviation of a target provided with a retroreflector from a predetermined position in three dimensions, which comprises:
a laser (4) and a position-sensitive detector (16) located beside it, which are arranged in a common element (7),
optical focussing devices (6, 13) for directing the laser beam (5) at the retroreflector (3) and for focussing the reflected light (12) on the position-sensitive detector (16), and
a laser range-finder (15, 17), characterised in that
the common element (7) is provided for joint displacement of the laser (4) and of the detector (16) in the three dimensions (X, Y, Z), and that circuits (10, 17) are provided for readjustment of the common element (7) in the laser beam direction (Z) to a position which corresponds to optimum focussing on the target at the measured distance and in directions (X, Y) perpendicular thereto to a position, in which the position-sensitive detector (16) emits a zero signal, the deviation being able to be calculated from the magnitude of the readjustment and displayed.

2. Device according to Claim 1, characterised in that the position-sensitive detector is a quadrant detector.

3. Device according to Claim 1 or 2, characterised in that the laser range-finder (15, 17) is a travel time range-finder.

4. Device according to Claim 2 or 3, characterised in that in front of the quadrant detector (16) it comprises a beam divider (14).

5. Device according to one of Claims 1 to 4, characterised in that the optical channels for the laser beam (5) emitted and the reflected light (12) received are screened from each other.

6. Device according to one of Claims 1 to 5, characterised in that the optical channels for the laser beam (5) emitted and reflected light (12) received are located one beside the other.

7. Device according to one of Claims 1 to 5, characterised in that the optical channels for the laser beam (5) emitted and reflected light (12) received are arranged concentrically.

8. Device according to one of Claims 1 to 7, characterised in that it additionally comprises a halogen floodlight (21).

9. Device according to Claim 8, characterised in that the halogen floodlight (21) comprises an IR-filter (22) with a tilting device (23).

10. Device according to one of Claims 1 to 9, characterised in that it comprises a television camera (24).

11. Device according to Claim 10, characterised in that the television camera (24) is a matrix-CCD camera.

12. Device according to one of Claims 1 to 11 for shooting simulation, characterised in that it comprises a display device (19) for the hit position and deviation.

## Revendications

1. Dispositif pour déterminer la position d'une cible pourvue d'un rétroréflecteur à partir d'un endroit prédéterminé dans trois directions spatiales, comprenant un laser (4) et un détecteur de position (16) juxtaposé, qui sont disposés dans un élément commun (7),
des dispositifs optiques (6, 13) pour diriger le faisceau laser (5) sur le rétroréflecteur (3) et pour renvoyer la lumière réfléchie (12) sur le détecteur de position (16), et
un télémètre à laser (15, 17),
caractérisé en ce que l'élément commun (7) est disposé de manière à permettre une translation commune du laser (4) et du détecteur (16) dans les trois directions spatiales (X, Y, Z), et en ce que des circuits (10, 17) sont prévus pour orienter l'élément commun (7), dans la direction (Z) du faisceau laser, sur une position qui correspond à une focalisation optimale sur la cible à la distance mesurée, et, dans les deux directions orthogonales (X, Y), sur une position pour laquelle le détecteur de position (16) délivre un signal zéro, ladite position de la cible pouvant être calculée et affichée à partir de la valeur de cette orientation.

2. Dispositif selon la revendication 1, caractérisé en ce que le détecteur de position est un détecteur à quadrants.

3. Dispositif selon la revendication 1 ou 2, caractérisé en ce que le télémètre à laser (15, 17) est un télémètre à temps de transit.

4. Dispositif selon la revendication 2 ou 3, caractérisé en ce qu'il comprend un séparateur de faisceau (14) devant le détecteur à quadrants (16).

5. Dispositif selon l'une quelconque des revendications 1 à 4, caractérisé en ce que les canaux optiques pour le faisceau laser émis (5) et la lumière réfléchie reçue (12) sont mutuellement isolés.

6. Dispositif selon l'une quelconque des revendications 1 à 5, caractérisé en ce que les canaux optiques pour le faisceau laser émis (5) et la lumière réfléchi reçue (12) sont juxtaposés.

7. Dispositif selon l'une quelconque des revendications 1 à 5, caractérisé en ce que les canaux optiques pour le faisceau laser émis (5) et la lumière réfléchie reçue (12) sont concentriquement disposés.

8. Dispositif selon l'une quelconque des revendications 1 à 7, caractérisé en ce qu'il comprend en outre un projecteur à halogène (21).

9. Dispositif selon la revendication 8, caractérisé en ce que le projecteur à halogène (21) comprend un filtre infrarouge (22) avec mécanisme de pivotement (23).

10. Dispositif selon l'une quelconque des revendications 1 à 9, caractérisé en ce qu'il comprend une caméra de télévision (24).

11. Dispositif selon la revendication 10, caractérisé en ce que la caméra de télévision (24) est une caméra à matrice CCD.

12. Dispositif selon l'une quelconque des revendications 1 à 11 pour la simulation de tirs, caractérisé en ce qu'il comprend un dispositif d'affichage (19) pour la position d'impact et la distance.
